# NEW EUROPEAN PATENT SPECIFICATION

(11) **EP 0 078 690 B2**
(45) Date of publication and mention of the opposition decision: **29.03.1995**
(45) Mention of the grant of the patent: 13.05.1987
(21) Application number: 82305783.1
(22) Date of filing: 01.11.1982
(51) Int. Cl.: B01D 53/48, B01J 21/06

(54) **Process for the reduction of the sulfur content in a gaseous stream**
Verfahren zur Verringerung des Schwefelgehaltes in einem Gasstrom
Procédé pour la réduction du contenu de sulfure dans un courant gazeux

(30) Priority: 02.11.1981 DE 3143400
(43) Date of publication of application: 11.05.1983
(73) Proprietor: MOBIL OIL CORPORATION, New York New York 10017 (US)
(72) Inventor: Kettner, Roland, 2081 Heist (DE); Lubcke, Torsten, 3101 Hambuhren II (DE); Liermann, Norbert, 3101 Bergen 2 (DE)
(74) Representative: Fisher, Adrian John

(56) References cited:
- EP-A- 0 038 741
- DE-A- 2 644 617
- DE-A- 2 754 595
- GB-A- 622 324
- GB-A- 2 122 597
- US-A- 4 092 404
- US-A- 4 141 962
- US-A- 4 171 347
- US-A- 4 243 647
- US-A- 4 314 983
- THE OIL AND GAS JOURNAL, March 12, 1979, David K. BEAVON et al.:"High recovery, lower emissions promised for Claus-plant tail gas", pp. 76-80

## Description

The present invention relates to a process for the reduction of the sulfur content in a gaseous stream, and more particularly to a process for extracting sulfur from a gas containing hydrogen sulfide.

The process of the invention is particularly adapted for desulfurizing the exhaust gas from the production of sulfur by the Claus process. However, the process is also applicable to sulfur-containing gas flows composed chiefly of light, saturated hydrocarbons, hydrogen or carbon monoxide.

According to the Claus process, elemental sulfur is produced from hydrogen sulfide by partial oxidation with atmospheric oxygen, followed by reaction of the sulfur dioxide formed from the hydrogen sulfide with the remaining portion of the hydrogen sulfide in the presence of a catalyst. The Claus system comprises a combustion chamber in which, at temperatures from 950-1350°C, about 50 to 70% of the sulfur contained in the feed gas is converted into elemental sulfur. The sulfur is condensed out by cooling the reaction gas to a temperature below the dew point of sulfur, after which the remaining gas is further reacted in contact with a catalyst at a temperature above the dew point of sulfur. For this purpose, the gas is heated prior to contacting the catalyst. Normally, the gas passes through not less than two such Claus catalyst stages between which the reaction gas is cooled to a temperature below the sulfur dew point, the condensed sulfur is removed and the remaining gas is reheated before entering the next Claus catalyst bed.

The different stages of the process may be represented by the following equations:

H₂S+3/2O₂→SO₂+H₂O (I)

2H₂S+SO₂⇄*3*Sₙ+2H₂O (II)

The overall reaction may be expressed by the following equation:

3H₂S+1.5O₂⇄*3*Sₙ+3H₂O (III)

For temperatures below 500°C, the symbol n in the above equations has a value of approximately 8.

The exhaust gas of the last catalytic process stage which, dependent on the thermodynamic equilibrium and process conditions, still contains small amounts of hydrogen sulfide, sulfur dioxide, carbon oxysulfide, carbon disulfide, and elemental sulfur in the form of a vapor or mist, is subjected to post-combustion wherein the sulfur components are converted into sulfur dioxide, the sulfur dioxide then being emitted into the atmosphere.

Depending on the way in which the process is conducted, the sulfur emitted as SO₂ into the atmosphere with the exhaust gas amounts to 2-6% of the sulfur contained in the feed gas in the form of H₂S. In view of air pollution and the loss of sulfur involved, further purification is imperative.

To reduce the emission of sulfur compounds from Claus systems, a number of special processes for aftertreatment have been developed and tested. Such aftertreatment is carried out either directly after the last catalytic process stage or after the post-combustion, depending on the type of process. These additional aftertreatment installations are, however, complicated and expensive having regard to the apparatus and process technology involved because of the diversity of the sulfur compounds occurring in the Claus exhaust gas.

One known type of aftertreatment, which is carried out before post-combustion, seeks to achieve by catalytic conversion as complete a reaction as possible between H₂S and SO₂. With said aftertreatment, the reaction temperature is lowered to below the condensation point of sulfur, whereby the reaction equilibrium corresponding to equation II is shifted in the direction towards the formation of sulfur. Moreover with this type of aftertreatment, a distinction is made between dry processes using alternating reactors in which the catalyst is intermittently charged with sulfur and discharged, and processes wherein hydrogen sulfide and sulfur dioxide react in a high-boiling catalyst-containing liquid, forming elemental sulfur, and the latter is drawn off continuously as a liquid product.

This known form of aftertreatment suffers from the disadvantage that any deviation from the optimum H₂S:SO₂ ratio in the Claus exhaust gas results in a reduced sulfur yield and that no conversion-or no appreciable conversion-of sulfur compounds, such as COS and CS₂, takes place. In practice, sulfur production or recovery efficiency of the Claus system and subsequent exhaust gas purification, using this known form of aftertreatment, may reach 98-99%. In addition, the cyclic mode of operation with alternating reactors requires additional reactors of different size, depending on the cycle time chosen, and also high expenditure for valves and piping.

In a second known type of aftertreatment, provision is made, by catalytic reaction with a hydrogen- and carbon monoxide-containing gas in the presence of water, for hydrogenation of sulfur dioxide and elemental sulfur into hydrogen sulfide while carbon oxysulfide and carbon disulfide are simultaneously hydrolyzed into hydrogen sulfide. Thereafter, the following known processes are used to process the resultant hydrogen sulfide containing gas:
a) absorptive scrubbing processes with regeneration, wherein removed H₂S is returned into the Claus system; and
b) oxidative scrubbing processes wherein removed H₂S in the solution is directly converted into elemental sulfur.

This second form of aftertreatment does not require a stoichiometric H₂S/SO₂ ratio in the Claus exhaust. Moreover, it leads to an almost complete conversion of COS and CS₂ so that sulfur yields of more than 99.8% can be obtained. However, these processes require high expenditure for elaborate apparatus and have high energy requirements. Further, the return of washed out H₂S reduces the Claus system capacity, while the production of waste water containing harmful constituents presents additional problems.

A third known type of aftertreatment comprises processes wherein all sulfur compounds are oxidized into SO₂ and then further processed. These processes are applied subsequent to the post-combustion of the exhaust gas and, therefore, are independent of the mode in which the Claus system is run. In this group, a distinction is made between dry processes, wherein the SO₂ is separated from the exhaust gas by adsorption and is either returned to the Claus system or further processed to form sulfuric acid, and wet processes, wherein the SO₂ is removed by absorptive scrubbing and further processed. Disadvantages of this third group of processes are that, for complete oxidation of COS and CS₂ into SO₂, the energy requirements are high and that, following the after-combustion. very large exhaust gas flows have to be treated. Moreover, the disadvantages mentioned in connection with the second type of aftertreatment occur here as well.

It is also known to increase the equilibrium conversion of the Claus reaction (equation II) by condensing out part of the water contained in the gas to be purified. The gas is subsequently reheated to the temperature required for the Claus reaction and caused to react over a Claus catalyst to form elemental sulfur. However, this process suffers from the disadvantage of producing waste water which is highly corrosive due to the formation of thiosulfuric acid, polythionic acids and sulfurous acid and any processing of such waste water requires high expenditure. Problems are also caused by the unavoidable formation of deposits of elemental sulfur during H₂O condensation. Moreover, there is no conversion of COS and CS₂ with this process so that the maximum yields of sulfur obtainable are at 98%. As a result of these disadvantages, this process has not been used on a commercial scale.

Where the aftertreatment involves conversion of all sulfur compounds into hydrogen sulfide, it is also known to oxidize part of said hydrogen sulfide with air into SO₂ or to convert part of the sulfur produced into sulfur dioxide and thereafter catalytically to convert the remaining hydrogen sulfide with sulfur dioxide at 125-150°C in fixed-bed reactors into sulfur, regeneration of the loaded catalyst being effected by passing hot oxygen-free gases containing hydrogen sulfide through the catalyst. In this way, it is possible to avoid the disadvantages associated with the first type of aftertreatment, such as dependence on H₂S/SO₂ ratio and COS/CS₂ content in the Claus exhaust gas. Disadvantages of this further process are the increased apparatus expenditure required by the addition of the hydrogenation/hydrolysis stage and the higher H₂S+SO₂ input concentration for the low-temperature reactor caused by the admixture of a separately produced flow of SO₂. The maximum conversion efficiency obtainable with this process in continuous operation of the Claus system and exhaust gas purification is 99%.

Also known are processes for direct catalytic oxidation of hydrogen sulfide in gas mixtures with air or oxygen into elemental sulfur. However, these processes also suffer from several disadvantages in that, they are not sufficiently effective in the thermodynamically advantageous temperature range or the proposed catalysts quickly lose their activity. In addition, the conversion efficiency obtainable may be poor, particularly with low sulfur concentrations because of the unfavorable reaction kinetics at low temperatures. Some of these processes also lack sufficient selectivity for H₂S oxidation, so that other oxidizable compounds, such as H₂, CO and hydrocarbons, are oxidized as well. To avoid this, the H₂S oxidation is carried out at temperatures below the dew point of sulfur, so that the catalyst becomes loaded with elemental sulfur and must periodically be regenerated. Further, some of the proposed catalysts quickly lose their activity due to adsorption of SO₂ or sulfation so that in one practical embodiment it was found that the catalyst remained sufficiently active for no more than 30 or 90 days. The proposed catalysts are bauxite, aluminosilicate zeolites, active carbon, active components in the form of the oxides or sulfides of tungsten, vanadium, chromium, iron, cobalt, nickel, copper, molybdenum, silver, and manganese on inactive porous carrier materials, as well as alkali metal sulfides and combinations of alkali metal oxides with alkaline earth metal oxides.

GB-A-622324 discloses the direct oxidation of hydrogen sulfide using a titanium-oxygen compound as a catalyst. The titanium-oxygen compound is obtained by heating orthotitanic acid.

DE-A-2,754,595 describes a process for cleaning the effluent gases of a Claus unit and uses a catalyst containing silver or 1 to 20% titanium dioxide "when treating a gas containing carbon oxysulfide and/or carbon disulfide" (page 10, lines 17-22). In general terms, this publication is directed to the hydrolysis of COS and CS₂ using a reducing atmosphere-see page 12, lines 2-9, stating that it is preferred to have a hydrolysis step in the substantial absence of oxygen.

US-A-4,141,962 describes the treatment of carbon derivatives of sulfur in the Claus process and recognises that the best way to destroy COS and CS₂ is by hydrolysis. That document notes that TiO₂ is a good catalyst for such a reaction but emphasises that high TiO₂ concentrations are to be avoided.

EP-A-38741 is concerned with improving TiO₂ catalysts for use in catalysing the second reaction (equation II) of the Claus process; it is permitted for oxygen to be present, but it is stated quite clearly that oxygen causes no change to the yield (page 20, lines 1-4). The catalysts have a specific surface area between about 5 and 300 m²/g and a total pore volume between about 0.05 and 0.5 cm³/g.

Thus, to date, there has been no satisfactory process for permitting selective catalytic oxidation of hydrogen sulfide into elemental sulfur entirely in the gas phase, at thermodynamically favourable temperatures, particularly low temperatures, at a high reaction rate, particularly with a high degree of conversion, and in long-term or continuous operation.

According to the present invention, there is provided a process for reducing the H₂S content of a gas stream by contacting the gas stream and oxygen at an elevated temperature with a catalyst containing a titanium-oxygen compound as an active ingredient, to convert H₂S directly into elemental sulfur, characterized in that the gas stream is subjected to catalytic hydrogenation/hydrolysis to convert substantially all the sulfur compounds of the gas stream into hydrogen sulfide prior to contacting said gas stream with said titanium compound-containing catalyst, said gas stream contains less than 10% by volume of water and is at a temperature of 160° to 320°C when contacted with said titanium compound-containing catalyst, and said catalyst contains at least 80% by weight of titanium dioxide as the titanium-oxygen compound and has a specific surface area of 80 - 150 m²g⁻¹ and a pore volume of 0.3 -0.45 cm³g⁻¹.

The process of the invention makes it possible to convert substantially all the sulfur compounds contained in the feed gas into elemental sulfur. It is economical in operation and energy consumption and allows sulfur yields of 99.5% to be obtained in long-term operation even in the case of the highly varying operation of the Claus system. The process according to the invention requires less capital investment and utilities as compared with known processes yet produces equally high sulfur yields. It can also be used for producing sulfur from gas flows having an H₂S content that is too low for processing by the Claus process. These may also be gas flows consisting mainly of light, saturated hydrocarbons, hydrogen or carbon monoxide, as these compounds are not oxidized under the conditions for selective oxidation of H₂S into elemental sulfur. For carrying out the process according to the invention no apparatus and equipment other than that tried and proven in existing sulfur production and exhaust gas purifying plants is required.

In the process of the invention, the oxidation of hydrogen sulfide into elemental sulfur takes place at temperatures of 160-320°C entirely in the gas phase, so that no separation of sulfur on the catalyst occurs.

The process according to the present invention is carried out after the sulfur compounds to be purified have first been completely converted, by known processes, into hydrogen sulfide. This may be effected by reaction with a hydrogen-containing gas at temperatures from 250-400°C, on catalysts containing metal oxides/sulfides of the 6th and/or 8th group of the Periodic Table. In the case of exhaust gases from Claus systems, the noxious carbon monoxide is removed to a large extent at the same time, in accordance with

CO+H₂O⇄CO₂+H₂.

Thereafter, the hydrogen sulfide-containing gas is cooled and the condensed water is removed. The conversion efficiency obtainable in the subsequent oxidation of H₂S to elemental sulfur is highly dependent on the water content. In the examples indicated, the water content is reduced to a value of 10% by volume, preferably to 4-6% by volume. The gases are then mixed with an approximately stoichiometrical amount of air or oxygen-based on the hydrogen sulfide present-heated and introduced into the oxidation reactor. The oxidation reactor contains a titanium dioxide catalyst with high activity for the conversion of hydrogen sulfide into sulfur at thermodynamically favorable temperatures.

The catalyst contains at least 80% by weight TiO₂ as the active component, and has a specific surface of 80-150 m² · g⁻¹ and a total pore volume of 0.30-0.45 cm³ · g⁻¹. In order to increase the mechanical strength of the catalyst, alkaline earth metal sulfates can be added in an amount of 5-20% by weight.

H₂S conversions into elemental sulfur of between 70 and 95% are obtained depending on the H₂S content, temperature, reaction time and oxygen content. Preferably the conditions are selected in such a way that 80-90% of the H₂S are converted into S. Undesirable side reactions, such as the formation of COS or SO₃, do not occur. The catalyst used in the present invention is equally well suited for the direct oxidation of H₂S into S (equation III) and for use in Claus reactors (equation II). In contrast to catalysts based Al₂O₃, the TiO₂ catalyst of the invention is not de-activated by the formation of sulfate and, in contrast to catalysts based on SiO₂ or aluminosilicates, it is completely stable in steam-containing gases at high temperatures as well as with alternating stress. It can also be used in the presence of excessive oxygen without requiring periodic regeneration.

Depending on the H₂S content in the feed gas for the oxidation stage and the required sulfur yield, the oxidation reaction can be followed by additional catalytic stages.

According to a preferred embodiment of the process according to the invention, the gas supplied to the oxidation reactor is mixed with air or oxygen so that an H₂S/O₂ ratio of 1.5 and 2 to 1 is maintained. With a temperature between 200 and 270°C and a space velocity of 500-3000, preferably 800-1500 h⁻¹ the exhaust gas contains only unreacted hydrogen sulfide, sulphur dioxide being present in only trace amounts. This gas can be supplied to a second oxidation reactor in which additional elemental sulfur is formed with the same catalyst as in the first oxidation stage in the thermodynamically more favorable temperature range of 190-240°C. Preferably, an H₂S/O₂ ratio of 1:1 is used in the second oxidation reactor resulting in H₂S/SO₂ ratio in the exhaust gas of about 2:1 and permitting maximum conversion. The space velocities correspond to those of the first oxidation stage.

According to an alternative preferred embodiment, using only one oxidation reactor supplied with air or oxygen, operation of the oxidation reactor is controlled according to the H₂S/O₂ ratio and the temperature in such a manner that the exhaust gas has an H₂S/SO₂ ratio of 2:1. This exhaust gas is then supplied to a Claus reactor operating at 170-200°C after condensation of the sulfur formed and after reheating. Additional sulfur is formed through oxidation of H₂S by SO₂ in contact with the titanium dioxide catalyst of the invention according to equation (II). Since the catalyst also has an excellent activity for the Claus reaction and is not de-activated by means of O₂ or sulfate, an optimum conversion can be achieved during long-term operation.

In accordance with yet a further preferred embodiment, the oxidation reactor is operated in such a way that as high a conversion as possible of H₂S into elemental sulfur is achieved. After condensation of the sulfur produced, the exhaust gas is supplied to a reactor which operates at 125-150°C and which effects almost complete adsorption on active Al₂O₃ of the sulfur contained in the vapor phase. With an H₂S/SO₂ ratio of 2:1, some sulfur is still formed after the Claus reaction. With low water contents, still about 50% of the sulfur compounds are converted to elemental sulfur even with sulfatized catalysts in this adsorption stage. The preferred space velocities are in the range from 800-1500 h⁻¹. Because of the low sulfur content of the gas after the oxidation stage, an approximately 8-20 hour desorption phase per week is sufficient for the removal of sulfur. For this purpose, the exhaust gas of the oxidation stage is heated to 230-270°C before it enters the adsorption reactor. After sulfur condensation at 120-135°C, the exhaust gas is subjected to post-combustion. The sulfur production efficiency of the Claus system and exhaust gas purification remains still above 99% even during this short-time desorption operation.

In the accompanying drawings,

Figure 1 is a flow diagram illustrating a process according to one embodiment of the invention, and

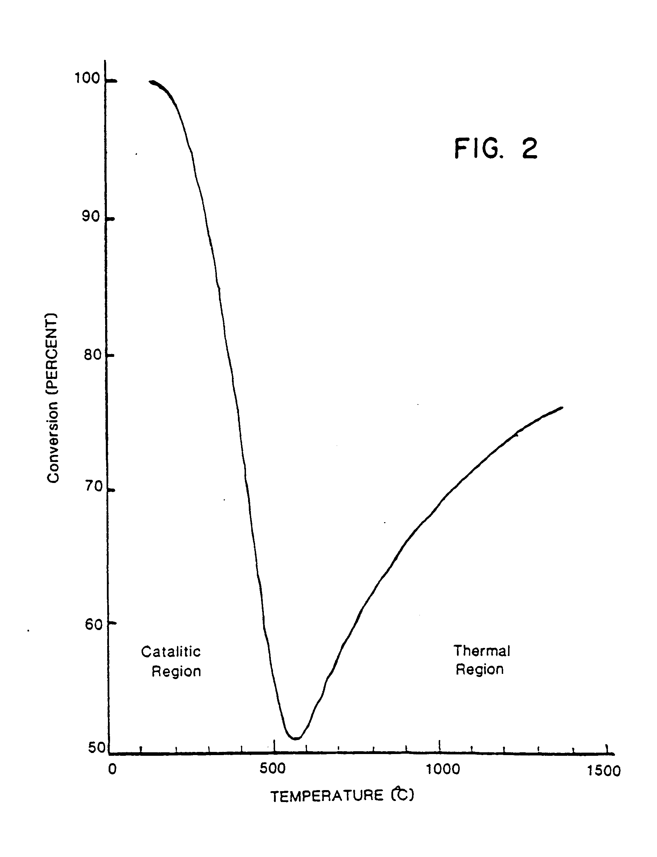

Figure 2 shows the theoretical thermodynamic conversion of H₂S into S through oxidation with air under water-free conditions as a function of the temperature.

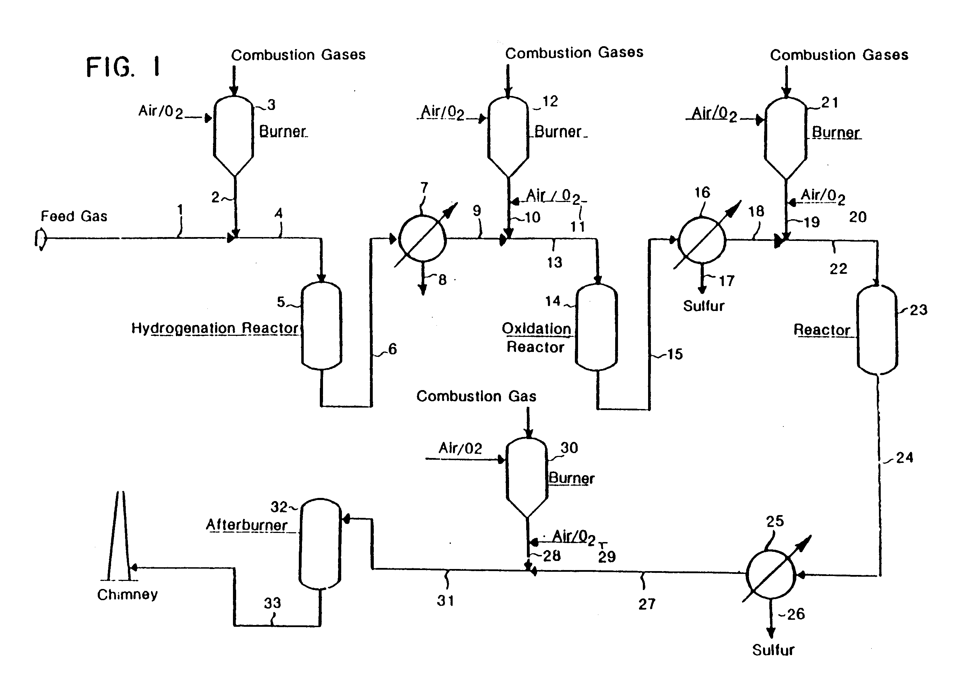

Referring to Figure 1, the feed gas (the exhaust gas from the Claus process) is fed through a line 1 to a line 4 where it is mixed with reducing gases from a line 2. This gas mixture should have a temperature of 200 to 400°C, preferably 280 to 320°C. The reducing gases, preferably hydrogen and/or carbon monoxide, are produced by below stoichiometric combustion of suitable combustion gases in a burner 3. The burner is controlled in such away that steam and the reducing gases are available in sufficient amounts to convert all sulfur-containing gases in the line 1 into hydrogen sulfide by hydrogenation or hydrolysis and to control the temperature in the line 4.

Subsequently, the gas from the line 4 passes to a hydrogenation reactor 5 which is filled with a pre-sulfided cobalt and molybdenum catalyst. In this reactor, the sulfur compounds contained in the feed gases are almost completely converted into hydrogen sulfide. Thereafter the gases flow through a line 6 to a condenser 7 in which they are cooled, preferably to 10-50°C. The acid water which develops in this way is discharged through an outlet 8. The cooling of the gases from the line 6 can also be effected by a combination of direct cooling, using a waste heat boiler, and indirect cooling.

Before entering oxidation reactor 14, the cooled gas from the condenser 7, preferably with a steam dew point of 10-50°C, is mixed in a line 13 with the amount of oxygen and/or air from lines 10 and 11 stoichiometrically necessary for the direct oxidation of the H₂S in the preferred H₂S/O₂ ratio of 1.5-2:1. The temperature of the gases entering the reactor 14 are maintained within the preferred range from 180 to 300°C by means of a burner 12 which is operated with a suitable combustion gas and air or O₂ at a permanently adjusted ratio. The heating of the gases can, of course, be effected also in any other suitable way.

In the reactor 14, the reactant gases come into contact with a titanium dioxide catalyst preferably at space velocities of 800-1500 V/V/h and temperatures in the range from 200-270°C. In this temperature range, direct conversion of H₂S into sulfur and steam at 80 to 95% efficiency is possible.

From the reactor 14, the reacted gases flow via a line 15 to a condenser 16 which is preferably operated within a temperature range of 120 to 140°C so that the gas mixture releases the sulfur vapor it carries. The condensed sulfur is then removed from the condenser 16 by way of an outlet 17.

After passage through the condenser 16, the gas mixture flows by way of lines 18, 22 to a second oxidation reactor 23. During passage through the lines 18, 22 the gas mixture is heated by a burner 21 or other device in such a way that temperatures from 190-240°C prevail in line 22. In addition, air and/or O₂ from a supply line 20 is introduced into the gas mixture by way of a line 19 to adjust the H₂S/O₂ ratio of the gas mixture in the line 22 to a value of 1:1 in order to perform a second direct oxidation.

This second direct oxidation is also performed with the aid of a titanium dioxide catalyst in reactor 23 at space velocities of 800-1500 V/V/h. Thereafter the oxidized gas mixture containing elemental sulfur vapor is supplied by way of a line 24 to a second condenser 25 through line 24 which preferably operates in a temperature range of 120 to 140°C. The condensed liquid sulfur is then discharged through an outlet 26.

From the condenser 25 the gas mixture flows to an after-burner 32 through lines 27, 31 in which the gas temperature is raised by means of a burner 30 to a value sufficient to allow complete oxidation of the remaining sulfur components in the after-burner 32. An excess of oxygen sufficient to effect complete oxidation in the reactor 32 is supplied by way of lines 28, 29. The exhaust gases from the reactor 32 can be supplied to the atmosphere through a line 33 and a smokestack.

In a variation of the process of said one embodiment, and with identical conditions prevailing in the line 13, the amount of oxygen or air from the line 11 is adjusted so that a H₂S/SO₂ ratio of 2:1 is achieved in the line 15, downstream of the oxidation reactor 14, As described above, the elemental sulfur generated is then condensed within the condenser 16 and discharged through the outlet 17. Thereafter, the gas mixture is reheated, either by means of a stoichiometrically operated burner 21 and/or indirect heater, heat exchanger, without a supply of air and/or oxygen and is led through the line 22 to the reactor 23 which is operated in a preferred temperature range from 180-200°C and provided with a titanium dioxide catalyst. Additional sulfur is produced in this reactor in accordance with the Claus reaction. The preferred space velocities are 800-1500 V/V/h. After the sulfur in the resultant vapor has been removed in the condenser 25, which is preferably operated in a temperature range from 120 to 140°C. the process is carried out in the manner described above.

With another variation of the process of said one embodiment, so much air and/or oxygen is introduced through line 11 that, with the other conditions remaining the same as described above, the H₂S/O₂ ratio in the line 13 is such as to allow a maximum conversion of H₂S into an elemental sulfur in the reactor 14. Subsequently, the sulfur vapor-containing gas is led into the condenser 16 which is operated in a preferred temperature range from 130 to 150°C and the elemental sulfur is discharged through outlet 17. The gas mixture then flows to the reactor 23 which is operated in a preferred temperature range from 125 to 150°C and which contains an active aluminum oxide catalyst by which adsorption of sulfur takes place according to a Claus reaction. After it has been charged with sulfur, the reactor 23 is drained of the sulfur with the help of the stoichiometrically operated burner 21 which adjusts the temperature of the gas mixture in line 22 to a preferred range of 230-270°C. The sulfur condenser 25 is operated under the same conditions as above described. The feed gas may also be supplied to the line 6 or the line 9, depending on the gas composition and insofar as it contains H₂S as the only S-carrying component, or in addition is water-free.

The invention will now be more particularly described with reference to the following Examples.

### Example 1

A feed gas having the following composition is processed in a Claus system with 2 catalytic stages:

| | |
|---|---|
| H₂S: | 76% by volume |
| CO₂: | 21% by volume |
| CH₂: | 2.5% by volume |
| N₂: | 0.5% by volume |

A sulfur yield of approximately 95% is achieved.

Column 1 of the following Table I shows the composition of the Claus exhaust gas leaving the last sulfur condenser/separator which is operated at approximately 125°C.

After hydrogenation/hydrolysis at 290-320°C and a space velocity of 1100-1200 h⁻¹, a gas mixture is obtained according to column 2 of Table I.

The water is removed from this gas by cooling it to 35°C (column 3), whereafter the gas is reheated to 200°C before it enters the oxidation reactor 14.

The gas volume is reduced by about 25% by this water separation. For this reason, the subsequent piping and apparatus may have correspondingly smaller dimensions as compared with other processes which are not equipped with water separation, which has an advantageous effect on capital costs. Furthermore, considerably less energy is required for the necessary intermediate heating than in the case of a water-containing exhaust gas. Moreover, since after hydrogenation, practically the only sulfur compound present in the gas is H₂S, the processing of the condensed water does not pose any problems in a conventional acid water stripper. The treated water can therefore be used as cooling water or even as boiler feedwater.

An approximately stoichiometric amount of air, relative to the amount of hydrogen sulfide, is supplied to the hydrogenated gas before it enters the oxidation reactor 14. In the present example, about 0.6 to 1 m³ O₂ is added to each m³ H₂S.

With an inlet temperature of 200°C, the hydrogen sulfide is converted into sulfur at the titanium dioxide catalyst with a space velocity of 1100 h⁻¹. The reactor temperature rises to about 280°C by the exothermic reaction and about 85% of the H₂S is converted into sulfur. After sulfur condensation at 130°C, the exhaust gas has a composition according to column 4 of Table I. Relative to the hydrogen sulfide used in the Claus system, the sulfur yield amounts to 99.1%.

It will be apparent that the sulfur yield can be increased by ensuring a higher sulfur production efficiency of the Claus system, a further reduction of the water content in the condensation stage, a lower space velocity and/or by the removal of heat from the catalyst bed.

By the addition of a further Claus reactor operating at the temperature of the gas flow leaving the sulfur condenser 16, i.e., at 135°C and a space velocity of 1100 n⁻¹, the sulfur yield can be further increased. Conventional active aluminum oxide serves as the catalyst and the reactor can be operated continuously for about 1 week before a desorption phase becomes necessary. This is effected for approximately 12 hours with the exhaust gas leaving the condenser 16 being heated to about 240°C. Column 5 shows the composition of the exhaust gas after the adsorption phase. The overall sulfur production efficiency then amounts to 99.5% relative to the H₂S used in the Claus system.

As usual, the exhaust gas is subjected to after combustion. Since besides H₂S and traces of elemental sulfur, practically no other sulfur compounds (COS, CS₂) must be oxidized, catalytic post-combustion can be effected at a low temperature (290-300°C) and hence involves a considerably lower energy consumption as compared with a thermal post-combustion.

**TABLE I**

| | | (1) | (2) | (3) | (4) | (5) |
|---|---|---|---|---|---|---|
| H₂S | %/volume | 0.70 | 1.18 | 1.56 | 0.15 | 0.083 |
| SO₂ | %/volume | 0.35 | 0 | 0 | 0.073 | 0.043 |
| S₆₋₈ | g/m³ (vn) | appr. 1 | 0 | 0 | appr. 0.7 | max. 0 |
| COS | %/volume | 0.09 | 0.002 | 0.003 | 0.003 | 0.003 |
| CS₂ | %/volume | 0.09 | 0.002 | 0.013 | 0.003 | 0.003 |
| N₂+Ar | %/volume | 59.5 | 61.1 | 80.7 | 80.8 | 80.9 |
| CO₂ | %/volume | 8.4 | 9.0 | 11.9 | 11.5 | 11.5 |
| CO | %/volume | 0.43 | 0.05 | 0.065 | 0.06 | 0.06 |
| H₂ | %/volume | 1.4 | 1.07 | 1.41 | 1.33 | 1.33 |
| H₂O | %/volume | 29.0 | 27.6 | 4.4 | 6.1 | 6.15 |
| Total S yield % | | 95 | 95 | 95 | 99.1 | 99.5 |

It will be apparent that in this Example the second oxidation reactor 23 and condenser 25 of the process illustrated in the drawings are omitted.

### Example 2

In the case of a high H₂S content in the gas or exhaust gas to be treated, it may be more appropriate to perform the process in two successively arranged oxidation stages, in each of which the titanium dioxide catalyst according to the invention is used, owing to the highly exothermic nature of the selective oxidation of hydrogen sulfide into elemental sulfur. Such an arrangement is of course shown in Figure 1.

Table II shows typical data in connection with such a case.

With a feed gas containing, for example, 2.5% by volume H₂S and 5-6% by volume H₂O (column 1, Table II), and with the application of an approximately stoichiometric amount of oxygen/air in the first oxidation stage, an exhaust gas is obtained containing the sulfur which has not been converted as practically the only remaining sulfur compound. A conversion of at least 75% is attainable in continuous operation with a space velocity of approximately 1250 h⁻¹ and temperatures between 200 and 300°C. In this case also, lower space velocities and/or lower water contents can lead to improved conversion rates.

After sulfur condensation at approximately 130°C and reheating, the gas (column 2) is supplied to a second oxidation reactor 23. The O₂ amount is adjusted in such a way that an H₂S/SO₂ ratio of approximately 2:1 is obtained at the outlet of the reactor 23. The reactor temperature is between 200 and 230°C and the space velocity is 1250 h⁻¹. Once more 70% of the H₂S which had not been converted during the first oxidation stage is oxidized to sulfur (column 3), the greater part of which is separated in the subsequently arranged condenser 25 operating at 125°C.

Relative to the case of the Claus system to which Example 1 refers, the result is a total sulfur production of 99.3%.

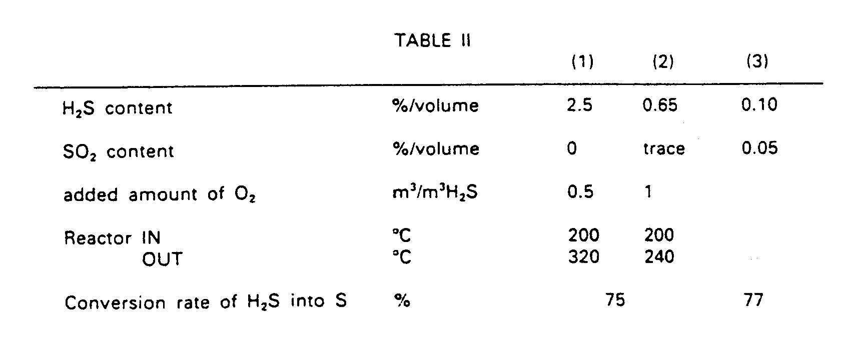

### Example 3

In order to increase the sulfur yield, the oxidation stage can also be operated in such a way as to produce an exhaust gas which has low content of H₂S and SO₂ with a molar ratio of approximately 2:1 and which, after sulfur condensation at 125°C and reheating to 180°C, is supplied to a Claus reactor.

The titanium dioxide catalyst according to the invention is used in the oxidation reactor as well as in the subsequent Claus reactor. Only the catalyst of the present invention opens up the possibility of attaining a high Claus yield without de-activating the catalyst at thermodynamically favorable temperatures in the presence of free oxygen. This would not be possible with a conventional Claus catalyst based on Al₂O₃. Typical data which are attainable in practical continuous operation are given in Table III.

A conversion of H₂S into elemental sulfur of about 80% is achieved during the initial oxidation stage with a feed gas with 2% by volume H₂S and 5-6% by volume H₂O (column 1) when applying a slightly higher than stoichiometric amount of O₂ at a space velocity of 1250 h⁻¹ and a temperature of 200-310°C.

The exhaust gas from the oxidation stage still contains low amounts of H₂O and SO₂ at a ratio of approximately 2:1 (column 2) and, after sulfur condensation at 125°C and reheating to 180°C, is supplied to a Claus reactor. In this way, it is possible to convert another 75% of the not yet converted sulfur compounds into elemental sulfur (column 3) in a continuous operation using a TiO₂ catalyst. This elemental sulfur is, far the greater part, separated in a subsequent sulfur condenser at 125°C. The space velocity in the Claus reactor is also at 1250 h⁻¹.

Relative to the case of the Claus system to which Example 1 refers, the result is a total sulfur production of 99.5%.

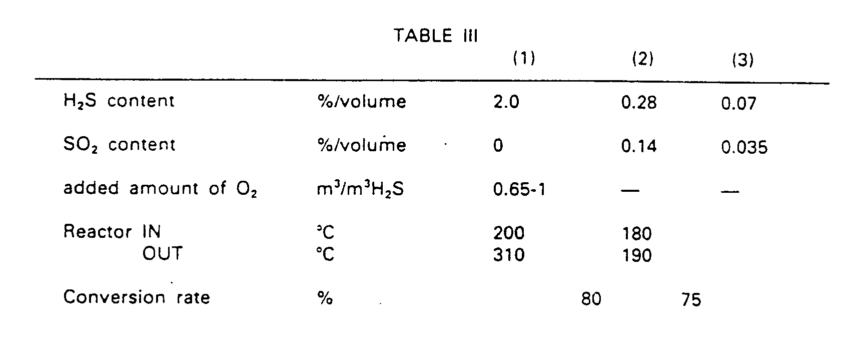

## Claims

1. A process for reducing the H₂S content of a gas stream by contacting the gas stream and oxygen at an elevated temperature with a catalyst containing a titanium-oxygen compound as an active ingredient, to convert H₂S directly into elemental sulfur, characterized in that the gas stream is subjected to catalytic hydrogenation/hydrolysis to convert substantially all the sulfur compounds of the gas stream into hydrogen sulfide prior to contacting said gas stream with said titanium compound-containing catalyst, said gas stream contains less than 10% by volume of water and is at a temperature of 160° to 320°C when contacted with said titanium compound-containing catalyst, and said catalyst contains at least 80% by weight of titanium dioxide as the titanium-oxygen compound and has a specific surface area of 80 - 150 m²g⁻¹ and a pore volume of 0.3 - 0.45 cm³g⁻¹.

2. A process according to claim 1, carried out at a space velocity of 500 - 3000 h⁻¹.

3. A process according to claim 1 or claim 2, wherein the catalyst contains 5 - 20% by weight of an alkaline earth metal sulfate.

4. A process according to any one of claims 1 to 3, wherein the H₂S/SO₂ ratio and the temperature are controlled to produce a molar ratio of non-converted H₂S to by-product SO₂ of 2:1.

5. A process according to any one of claims 1 to 4, wherein after condensation and separation of the elemental sulfur produced, the remaining gas stream is fed to a Claus reactor.

6. A process according to claim 5, wherein the Claus reactor employs an alumina catalyst.

7. A process according to any one of claims 1 to 3, wherein after condensation and separation of the elemental sulfur produced, the remaining gas stream is fed to another identical process.

## Patentansprüche

1. Verfahren zum Vermindern des H₂S-Gehalts eines Gasstroms durch Kontaktieren des Gasstroms und Sauerstoffs bei erhöhter Temperatur mit einem Katalysator, der als aktiven Bestandteil eine Titan-Sauerstoff-Verbindung enthält, um H₂S direkt in elementaren Schwefel umzuwandeln, dadurch gekennzeichnet, daß der Gasstrom einer katalytischen Hydrierung/Hydrolyse unterworfen wird, um im wesentlichen alle Schwefelverbindungen des Gasstroms in Schwefelwasserstoff umzuwandeln, bevor der Gasstrom mit dem die Titanverbindung enthaltenden Katalysator in Berührung gebracht wird, wobei der Gasstrom weniger als 10 Vol.-% Wasser enthält und eine Temperatur von 160 bis 320°C aufweist, wenn er mit dem die Titanverbindung enthaltenden Katalysator in Berührung gebracht wird, und wobei der Katalysator mindestens 80 Gew.-% Titandioxid als die Titan-Sauerstoff-Verbindung enthält sowie eine spezifische Oberfläche von 80 bis 150 m²g⁻¹ und ein Porenvolumen von 0,3 bis 0,45 cm³g⁻¹ aufweist.

2. Verfahren nach Anspruch 1, das bei einer Raumgeschwindigkeit von 500 bis 3000 h⁻¹ durchgeführt wird.

3. Verfahren nach Anspruch 1 oder 2, worin der Katalysator 5 bis 20 Gew.-% eines Erdalkalimetallsulfats enthält.

4. Verfahren nach einem der Ansprüche 1 bis 3, worin das H₂S/SO₂-Verhältnis und die Temperatur eingestellt werden, um ein Molverhältnis von nicht umgesetztem H₂S zum Nebenprodukt SO₂ von 2:1 zu erhalten.

5. Verfahren nach einem der Ansprüche 1 bis 4, wonach nach dem Kondensieren und Abtrennen des gebildeten elementaren Schwefels der restliche Gasstrom einem Claus-Reaktor zugeführt wird.

6. Verfahren nach Anspruch 5, worin der Claus-Rdpeaktor einen Aluminiumoxidkatalysator benutzt.

7. Verfahren nach einem der Ansprüche 1 bis 3, worin nach dem Kondensieren und Abtrennen des gebildeten elementaren Schwefels der restliche Gasstrom einem anderen identischen Verfahren zugeführt wird.

## Revendications

1. Un procédé de réduction de la teneur en H₂S d'un courant gazeux par contact du courant gazeux et d'oxygène, à température élevée avec un catalyseur contenant un composé titane-oxygène en tant qu'ingrédient actif pour convertir H₂S directement en soufre élémentaire, caractérisé en ce que le courant gazeux est soumis à hydrolyse/hydrogénation catalytique pour convertir pratiquement tous les composés de soufre du courant gazeux en hydrogène sulfuré préalablement au contact dudit courant gazeux avec le catalyseur contenant le composé du titane, ce courant gazeux contenant moins de 10% en volume d'eau et étant à une température comprise entre 160 et 320°C quand il est au contact avec le catalyseur contenant le composé du titane, ce catalyseur contenant au moins 80% en poids de dioxyde de titane en tant que composé titane-oxygène, et présentant une aire superficielle spécifique comprise entre 80 et 150 m²g⁻¹ et un volume de pores de 0,3-0,45 cm³g⁻¹.

2. Un procédé selon la revendication 1, effectué avec une vitesse spatiale de 500 à 3 000 h⁻¹.

3. Un procédé selon la revendication 1 ou 2, dans lequel le catalyseur contient entre 5 et 20% en poids d'un sulfate d'un métal alcalino-terreux.

4. Un procédé selon l'une quelconque des revendications 1 à 3, dans lequel le rapport H₂S/O₂ et la température sont contrôlés pour obtenir un rapport molaire H₂S non converti/SO₂ sous-produit de 2/1.

5. Un procédé selon l'une quelconque des revendications 1 à 4, dans lequel, après condensation et séparation du soufre élémentaire produit, le courant gazeux restant alimente un réacteur de Claus.

6. Un procédé selon la revendication 5, dans lequel le réacteur de Claus emploie un catalyseur d'alumine.

7. Un procédé selon l'une quelconque des reendications 1 à 3, dans lequel, après condensation et séparation du soufre élémentaire produit, le courant de gaz restant alimente une autre opération identique.
